# EUROPEAN PATENT SPECIFICATION

(11) **EP 1 886 773 B1**
(45) Date of publication and mention of the grant of the patent: **05.08.2009**
(21) Application number: 07015611.2
(22) Date of filing: 08.08.2007
(51) Int. Cl.: B25J 17/02

(54) **Wrist driving structure for industrial robot**
Handgelenkantriebsstruktur für Industrieroboter
Structure de commande du poignet pour robot industriel

(30) Priority: 10.08.2006 JP 2006218607
(43) Date of publication of application: 13.02.2008
(73) Proprietor: FANUC LTD, Minamitsuru-gun, Yamanashi 401-0597 (JP)
(72) Inventor: Inoue, Toshihiko, Fujiyoshida-shi Yamanashi 403-0017 (JP); Nakayama, Kazutaka, Yamanashi 403-0023 (JP); Iwayama, Takatoshi, Minamitsuru-gun Yamanashi 401-0511 (JP)
(74) Representative: Thum, Bernhard

(56) References cited:
- JP-A- 10 006 269
- JP-A- 62 287 991
- JP-A- 63 039 784
- US-A- 4 688 984

## Description

### Background of the Invention

### 1. Field of the Invention

The present invention relates to a wrist driving structure for an industrial robot, which comprises wrist elements having three degrees of rotational freedom about three individual axes, which are mutually intersecting and independently rotatable.

### 2. Related Art

Generally, in an industrial robot, elongated members, such as electric cables connected to a multiplicity of wrist elements moving freely within tolerated degrees of freedom are arranged such that they do not give rise to interference with adjacent robots or peripheral equipment. In order to increase productivity of a production line in a factory, one effective method is to lay-out as many robots as possible within a limited space, and it is desirable to provide an industrial robot which comprises compact wrist elements and elongated members arranged so as not to extend outward from the wrist elements.

Japanese Patent Publication No. 2005-96073 (Patent Reference 1) discloses an example of an elongated member arrangement structure for passing the elongated member through a hollow portion of the wrist element so as to prevent the cable element from being extended outward. By adopting such a structure, the behavior of the elongated members becomes stable, and the elongated members can be arranged within a limited space.

However, with the wrist element, there is a problem that, since it needs to be provided with a reduction gear having a complicated structure, or a gear set having a multiple stage construction, or the like, it is not easy to make a wrist element sufficiently compact. Japanese Patent Publication No. S62-287991 (Patent Reference 2) discloses an example of an industrial robot having a multiplicity of wrist elements provided rotatably about mutually intersecting individual rotational axes.

In this prior embodiment, an industrial robot comprises a first wrist element provided rotatably about a first axis, a second wrist element provided rotatably about a second axis, and a third wrist element provided rotatably about a third axis. Further, on one protruding portion of the first wrist element, there is provided a set of hypoid gears for driving the second wrist element with reduced rotational speed of one motor. On the other protruding portion of the first driving element, there is provided another set of hypoid gears for driving the third wrist element via a set of bevel gears in the second driving element with reduced rotational speed of the other motor.

However, with the wrist driving structure disclosed in the above-described Patent Reference 2, there is a problem that, although it is possible to obtain a relatively large reduction ratio using two hypoid gear sets provided within the first wrist element for driving the second and third wrist elements, the complication of the structure tends to increase the size, as well as the weight of the first wrist element. Thus, there is a need for a wrist driving structure that is capable of making the wrist element more compact so that work can be performed in a narrow working space without giving rise to interference with the surrounding environment while ensuring a large reduction ratio. There is an additional problem that, if the wrist element is heavy, moment of inertia becomes too large and the responsiveness of control cannot be increased to a level above a certain limit.

Japanese Patent Publication No. 10006269 (Patent Reference 3) discloses an industrial robot with a first wrist element comprising three motors for driving a second wrist element, a third wrist element and the machine tool, respectively. The output shafts of the motors are connected with coupled rods extending along the first wrist element which are furnished at one of their ends with worms which serve as a detention part in a spiral form. These worms working as driving gears mesh with driven gears in the form of worm wheels disposed coaxially.

### Summary of the Invention

It is an object of the present invention to provide a wrist driving structure for an industrial robot that is capable of making the wrist element more compact so that work can be performed in a narrow working space without giving rise to interference with the surrounding environment and the number of robots to be laid out in the working space can be increased so as to improve the productivity of the production line.

In order to attain the above object, in accordance with claim 1, there is provided a wrist driving structure for an industrial robot comprising: a first wrist element supported in cantilever fashion rotatably about a first axis; a second wrist element supported in cantilever fashion with a proximal end as a supporting point at a distal end side of the first wrist element pivotally about a second axis intersecting the first axis; a third wrist element supported in cantilever fashion at a distal end side of the second wrist element rotatably about a third axis intersecting the second axis; two driving motors provided in the first wrist element for driving the second wrist element and the third wrist element, respectively; and two gear sets for reducing a rotational speed of the two driving motors in predetermined reduction ratios; wherein each of the two gear sets comprises a driving gear driven by one of the driving motor and a driven ring gear which meshes with the driving gear, wherein the two driven ring gears are disposed coaxially with the second axis, and wherein the two driving gears are positioned parallel to each other at both sides of the plane containing said first axis and said second axis. Furthermore, the two gear sets are hypoid gear sets, the two driving gears are pinion gears, a first pinion gear thereof having right-hand helical teeth, and a second pinion gear thereof having left-hand helical teeth, and the two driven ring gears are coaxially laid one upon the other.

In accordance with this invention, since the two driven ring gears are disposed coaxially with the second axis that is shared in common, the space occupied by the driven ring gears on the distal end side of the first wrist element can be minimized. Since individual driving gears are disposed parallel to each other at positions offset relative to the plane containing said first axis and said second axis, the cross sectional area of the first wrist element in a plane perpendicular to the axis can be minimized. Therefore, the wrist element can be made compact, and work can be performed in a narrower working space without giving rise to interference with the surrounding environment. Since the number of robots to be laid out in the same working space can be increased, productivity of a production line can thereby be improved. The wrist elements can be provided at positions offset relative to the final rotational axis of the robot, so that space can be ensured for the cable elements for a working tool to be passed through the hollow portion of the final rotational axis of the robot, and interference of the cable elements with the surrounding environment can thereby be prevented.

### Brief Description of the Drawings

The above and other objects, features and advantages of the present invention will become more apparent by reading the following description of preferred embodiments of the invention with reference to appended drawings, in which:
Fig. 1 is a front view showing a wrist driving structure for an industrial robot according to a first embodiment of the present invention;
Fig. 2 is a plan view showing the wrist driving structure for the industrial robot of Fig. 1;
Fig. 3 is an overall view showing an example of an industrial robot;
Fig. 4 is an overall view showing another example of an industrial robot;
Fig. 5 is a front view showing a wrist driving structure for an industrial robot according to a second embodiment of the present invention;
Fig. 6 is a plan view showing the wrist driving structure for the industrial robot of Fig. 5;
Fig. 7 is a front view showing a wrist driving structure for an industrial robot according to a third embodiment of the present invention; and
Fig. 8 is a plan view showing the wrist driving structure for the industrial robot of Fig. 7.

### Detailed Description

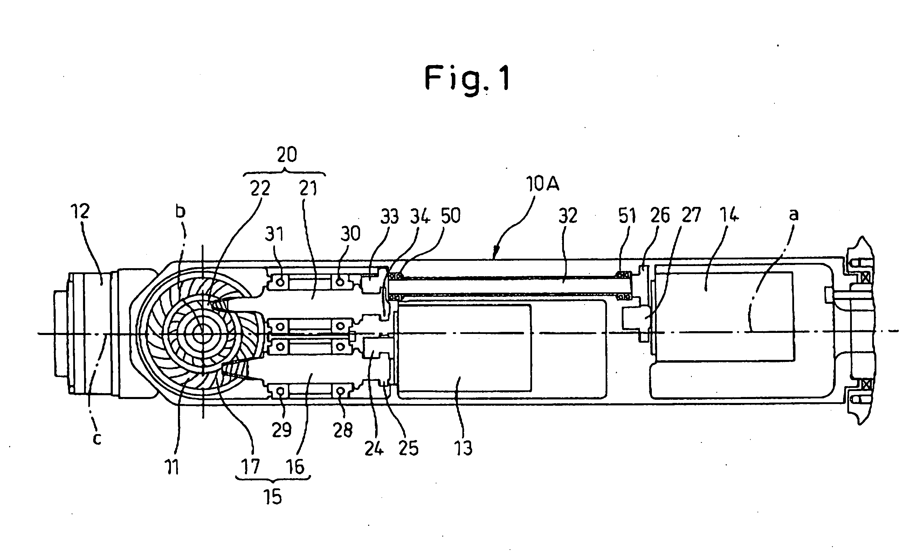

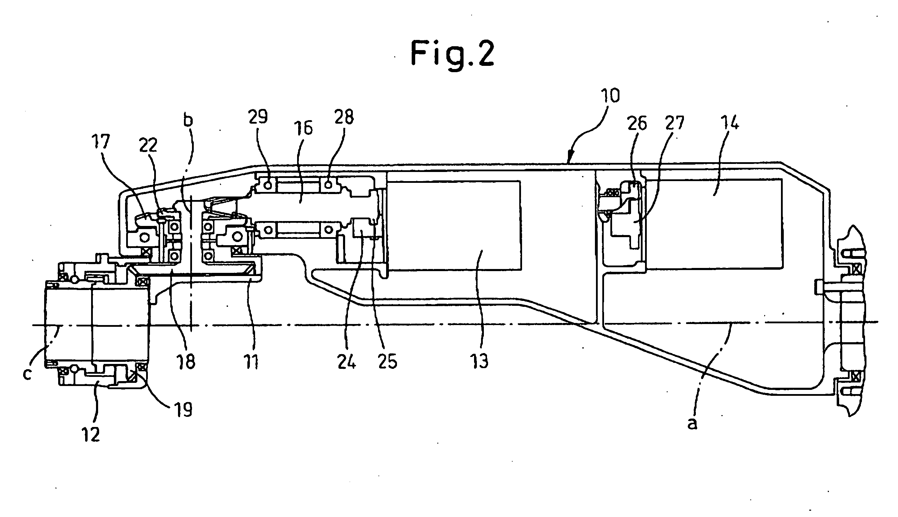

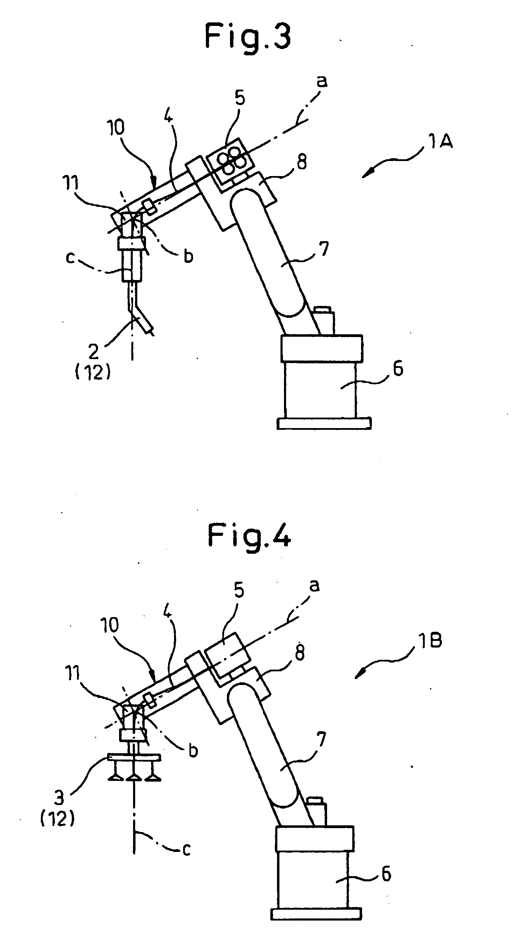

The present invention will be described in detail below with reference to the drawings showing specific examples of embodiments. Figs 1 and 2 are views showing a wrist driving structure according to a first embodiment of the present invention. Figs. 3 and 4 are overall views showing examples of an industrial robot to which a wrist driving structure of the present invention can be applied.

As shown in Figs. 3 and 4, exemplary industrial robots 1A, 1B are robots having six degrees of freedom in orthogonal axes, and Fig. 3 shows an arc welding robot provided with a welding torch 2 as the wrist element of the final shaft, and Fig. 4 similarly shows a handling robot provided with a hand tool 3. In the arc welding robot 1A, to the welding torch 2, there is connected a cable element 4 having a signal cable, a power supply cable, a welding wire, a gas hose and a wire conduit as a bundle. In the handling robot 1B, to the hand tool 3, there is connected a cable element 4 having a signal cable, power supply cable, an air supply tube, and the like as a bundle.

The two exemplary robots 1A, 1B are different in the configuration of the third wrist element 12 as an end-effector, in the construction of the cable element 4 connected to the third wrist element 12, and in the structure of the feeding device 5 for feeding the cable element 4, but have the rest of the components in common. Thus, both have a base 6, an upper arm 7, a forearm 8, and a wrist driving structure having three degrees of freedom about three rotational axes, in common. Therefore, the wrist driving structure for the industrial robot according to the present invention is applicable to both industrial robots 1A, 1B. Individual driving elements are adapted to be driven by servo motors corresponding to the individual driving elements so as to take specified positions and attitudes in accordance with instructions from a robot controller. The wrist driving structure according to the present invention is not limited to the industrial robots 1A, 1B shown in Figs. 3 and 4, but is also applicable to other industrial robots performing a sealing or picking operation.

The wrist driving structure of the present embodiment is composed of first to third wrist elements 10, 11, 12 having three degrees of freedom about three rotational axes. The first wrist element 10 is provided rotatably about a first axis a as a center axis. The second wrist element 11 is provided pivotally with the proximal end as a support point about a second axis b as a pivoting axis intersecting the first axis a on the distal end side of the first wrist element 10. The third wrist element 12 is provided rotatably about a third axis c as the final shaft intersecting the second axis b on the distal end side of the second wrist element 11.

The wrist driving structure of the present embodiment is constructed as an inline wrist having the first axis a, the second axis b, and the third axis c intersecting at one point. That is, as shown in Fig. 2, the first axis a and the second axis c lie on the same axis line. Therefore, at the time of rotation of the first wrist element 10, the interference radii of other wrist elements 11, 12 can be minimized, and a wrist driving structure having good rotational balance as well as good controllability can thereby be realized.

The first to the third wrist elements 10, 11, 12 are provided on the distal end side of forearm 8 connected to the base 6 and the upper arm 7 which are rotatably interconnected to each other. The upper arm 7 connected to the base 6 is pivotable with the end connected to the base 6 as a supporting point. The forearm 8 connected to the upper arm 7 is pivotable with the other end connected to the upper arm 7 as a supporting point. The base 6, the upper arm 7 and the forearm 8 are rotatable in three degrees of freedom about three rotational axes.

The characteristic portion of the wrist driving structure of the present embodiment is shown in detail in Figs. 1 and 2. As shown, in the first wrist element 10, there are provided two servo motors (driving motors) 13, 14 for driving the second wrist element 11 and the third wrist element 12, respectively, and two hypoid gear sets 15, 20 for reduction of the rotational speed of individual servo motors 13, 14 in a predetermined reduction ratio. Each of the hypoid gear sets 15, 20 consist of a pinion gear (small driving gear) 16, 21 driven by the servo motors 13, 14, and a ring gear (large driven gear) 17, 22 engaged with the pinion gear 16, 21 so as to rotate the second wrist element 11 or the third wrist element 12. One pinion gear 16 that is offset downward in the direction perpendicular to the axis of the center axis of the ring gears 17, 22 is formed with right hand teeth. The other pinion gear 21 is formed with teeth curved in a direction different from the one pinion gear 16. Thus, the other pinion gear 21 is formed with left hand teeth. The ring gears 17, 22 are laid one upon the other rotatably about the second axis b that is the common center axis.

The first wrist element 10 is supported at its proximal end rotatably on the distal end side of the forearm 8 in cantilever fashion. On the proximal end side of the first wrist element 10, there are provided a servo motor and a reduction gear for rotating the first wrist element 10 at a predetermined reduction ratio. The reduction gear is housed in the first wrist element such that its output section rotates coaxially with the first axis a. In the output section, a penetrating hollow bore is formed such that a control cable connected to the servo motors 13, 14 for driving the second wrist element 11 and the third wrist element 13 may be inserted through the hollow bore. By inserting the control cable through the hollow bore, torsion of the cable produced at the time of rotation of the first wrist element about axis a can be absorbed and damage such as breakage of the cable can be avoided. It is also possible to arrange the cable element 4 connected to the hand tool 3 (Fig. 4) corresponding to the third wrist element 12 along this control cable and to connect a connector provided at the end of the cable element 4 to a wrist flange of the third wrist element 12. In this manner, the cable element 4 arranged along the wrist element is prevented from being exposed to the outside so that the behavior of the cable element 4 is stabilized and a cable routing structure of the cable element 4 having a small interference radius is realized. It is also possible, in an alternative configuration, to pass the cable element 4 along the outside of the forearm 8 and to connect a connector provided at the end of the cable element 4 to a wrist flange of the third wrist element 12. In this manner, although the cable element 4 is exposed to the outside, the cable element 4 is not restricted by the hollow bore, and maintenance can also be assured. In a further alternative configuration, it is also possible to pass the cable element 4 along the outside of the third wrist element 12 and to connect a connector provided at the end of the cable element 4 to a wrist flange of the third wrist element 12. In this case, the same effect as described above can also be obtained.

In the first wrist element 10, there are housed a servo motor 13 for the second wrist element for rotating the second wrist element 11 about the second axis b and a servo motor 14 for the third wrist element for rotating the third wrist element 12 about the third axis c. The servo motor 13 for the second wrist element and the servo motor 14 for the third wrist element are disposed forward and rearward in the direction of the first axis a. In Fig. 1 showing a front view of the first wrist element 10, the output shafts of the individual servo motors 12, 14 are situated at offset positions such that they are generally symmetric with respect to a plane containing the first axis a and the second axis b. Thus, individual servo motors 13, 14 are provided in parallel to each other on two sides of the plane containing the first axis a and the second axis b at positions offset relative to each other in forward-rearward direction and partly overlapping each other.

By disposing the servo motor 13 for the second wrist element on the distal end side of the first wrist element 10 and the servo motor 14 for the third wrist element on the distal end side of the first wrist element 10, the two motors 13, 14 can be arranged in partly overlapping manner so that the cross sectional area of the first wrist element may be made small.

On the distal end side of the first wrist element 10, two hypoid gear sets 15, 20 are provided for transmitting the driving force of two servo motors 13, 14 to the second wrist element 11 and to the third wrist element 12, respectively. In Fig. 1, a pinion gear 16 for the second wrist element is connected via a set of spur gears (or helical gears or the like) 24, 25 to the output shaft of the servo motor 13 situated on the lower side. The pinion gear 16 for the second wrist element is rotatably supported by a pair of front and rear bearings 28, 29 with the distal end side offset in the direction perpendicular to the second axis b as the center axis of the ring gear 17 for the second wrist element so as to mesh with the ring gear 17 for the second wrist element.

A pinion gear 17 for the third wrist element is connected via a drive shaft 32 to the servo motor 14 situated on the upper side. An end of the drive shaft 32 is connected via a set of spur gears (or helical gears or the like) 26, 27 to the output shaft of the servo motor 14, and the other end of the drive shaft 32 is connected via a similar set of spur gears (or helical gears or the like) 33, 34 to the pinion gear 21. Two ends of the drive shaft 32 are supported by bearings 50, 51. The pinion gear for the third wrist element is rotatably supported by a pair of front and rear bearings 30, 31 with the distal end side offset from the second axis b as the center axis of the ring gear 22 for the third wrist element so as to mesh with the ring gear 22 for the third wrist element. The ring gear 22 for the third wrist element rotates the third wrist element 12 about the third axis via a pair of bevel gears 18, 19 which are orthogonal to each other.

In this embodiment, the direction of the tooth form formed on the two pinion gears 16, 21 are, such that the pinion gear 16 for the second wrist element has right hand teeth formed on outer peripheral surface and the pinion gear 21 for the third wrist element has left hand teeth formed on outer peripheral surface. Since the helix direction of the tooth formed on the two pinion gears differs from each other in this manner, it is possible to dispose the two pinion gears 16, 21 at positions offset in the direction perpendicular to the second axis b, symmetrically.

The outer diameters of the ring gear 17 for the second wrist element and the ring gear 22 for the third wrist element having the center axis in common are different, and the ring gear 22 for the third wrist element having smaller outer diameter is rotatably fitted inside the ring gear 17 for the second wrist element. Thus, the ring gear 17 for the second wrist element and the ring gear 22 for the third wrist element are disposed coaxially with the second axis b in common.

Since the motor 13 for the second wrist element and the motor 14 for the third wrist element are disposed at positions generally symmetric with respect to the first axis a, it is possible to reduce the cross sectional area of the first wrist element 10 in the section perpendicular to the axis due to disposition of the two servo motors 13, 14. Since the driving force of these servo motors 13, 14 is transmitted via the hypoid gear sets 15, 20 to respective wrist elements 11, 12, large rotational torque can be transmitted via the hypoid gear sets 15, 20 with a large reduction ratio. For example, large reduction ratio, e.g. ratio of 10-50, can be obtained by one hypoid gear set 15, 20. Therefore, as compared to a prior case where an expensive reduction mechanism or a multi-stage reduction gear mechanism is used, the wrist element 10 can be made compact, and the power transmission efficiency for the servo motors 13, 14 can be increased.

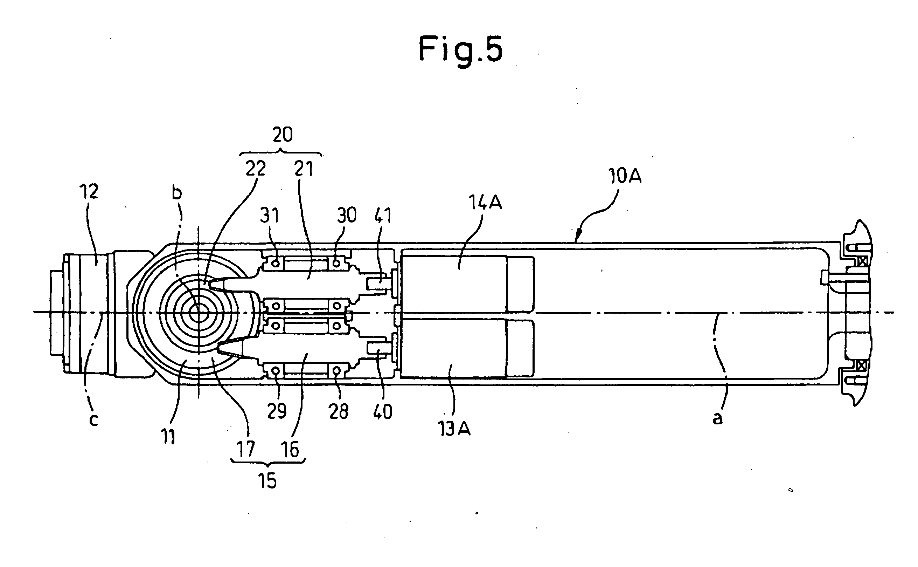

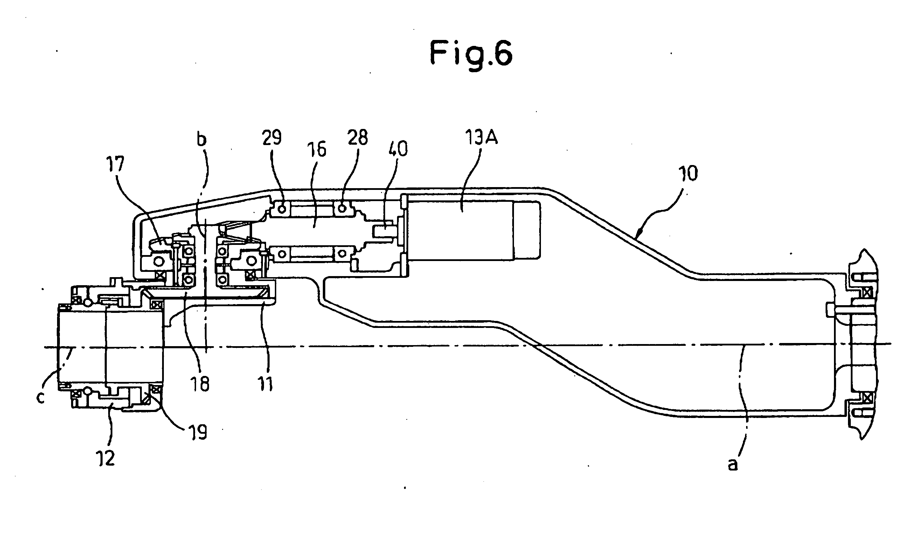

Next, a wrist driving structure for an industrial robot according to a second embodiment of the present invention will be described with reference to Figs. 5 and 6. Constituents common to this embodiment and to the first embodiment are denoted by same reference numerals or symbols, and duplicate explanation thereof is omitted.

The present embodiment differs from the first embodiment in disposition of the servo motors 13A, 14A in the first wrist element 10A. As shown in the drawings, two servo motors 13A, 14A are disposed side by side in the direction perpendicular to the first axis a . The proximal ends of the pinion gears 16, 21 are directly connected to the output shaft 40, 41 of the two servo motors 13A, 14A. With such a construction, need for gears and drive shafts for connecting the servo motors 13A, 14A to the hypoid gear sets 15, 20 is eliminated so that the wrist driving structure is simplified and cost can be reduced. The present embodiment is otherwise common to the first embodiment, and therefore, further explanation will be omitted.

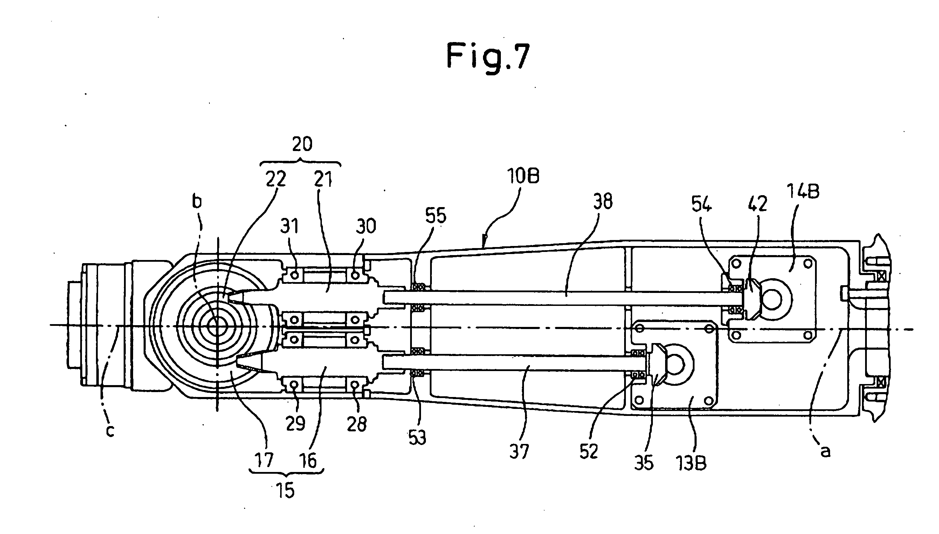

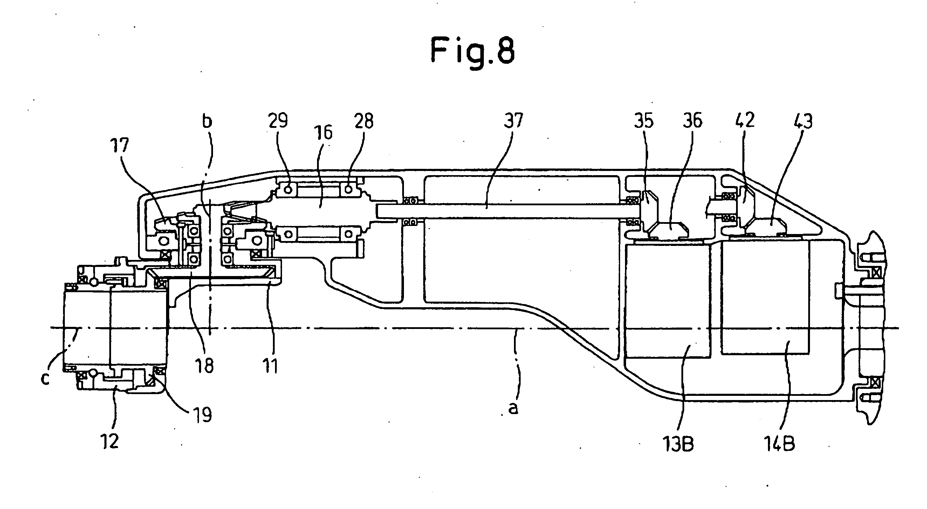

Next, a wrist driving structure for an industrial robot according to a third embodiment of the present invention will be described with reference to Figs. 7 and 8. Constituents common to this embodiment and to the first embodiment are denoted by same reference numerals or symbols, and duplicate explanation thereof is omitted.

The present embodiment also differs from the first embodiment in disposition of the servo motors 13B, 14B in the first wrist element 10. In the present embodiment, two servo motors 13B, 14B provided in the first wrist element 10 are disposed in the direction perpendicular to the first axis a. That is, each of the output shafts of the servo motors 13B, 14B are perpendicular to the first axis a. Therefore, the driving force of the servo motors 13B, 14B is transmitted via a pair of bevel gears 35, 36, 42, 43 to the pinion gears 16, 21, respectively. Since there is a distance between the servo motors 13B, 14B and the pinion gears 16, 21, drive shafts 37, 38 are inserted between them. Both ends of each of the drive shafts 37, 38 are supported by bearings 52-55. With this construction, since the servo motors 13B, 14B can be disposed on the proximal end side of the first wrist element 10, moment of inertia about the first axis a can be minimized, so that control response can be improved. Controllability of the wrist element can be improved by using flat type servo motors having a large cross sectional area, and the wrist driving structure can be made inexpensive and compact.

The present invention is not limited to the above-described embodiments, but can be implemented in various modifications. Although two gear sets are both hypoid gear sets 15, 20 in the present embodiment, it is also possible, in the case where large reduction ratio of one of the second wrist element 11 and the third wrist element 12 is not required, to construct two gear sets such that one gear set is hypoid gear set and the other gear set is a set of a worm or bevel gear and ring gear.

Also, the curving direction of teeth formed on the outer peripheral surface of the pinion gears 16, 21 may be arbitrarily as long as the two pinion gears 16, 21 having teeth formed in oppositely curving directions.

## Claims

1. A wrist driving structure for an industrial robot comprising:
a first wrist element (10, 10A, 10B) supported in cantilever fashion rotatably about a first axis (a);
a second wrist element (11) supported in cantilever fashion with a proximal end as a supporting point at a distal end side of said first wrist element (10, 10A, 10B) pivotally about a second axis (b) intersecting said first axis (a);
a third wrist element (12) supported in cantilever fashion at a distal end side of said second wrist element (11) rotatably about a third axis (c) intersecting said second axis (b);
two driving motors (13, 14) provided in said first wrist element (10, 10A, 10B) for driving said second wrist element (11) and said third wrist element (12), respectively; and
two hypoid gear sets (15, 20) for reducing a rotational speed of said two driving motors (13, 14) in predetermined reduction ratios;
wherein each of said two gear sets (15, 20) comprises a driving gear (16, 21) driven by one of said two driving motors (13, 14) and a driven ring gear (17, 22) which meshes with said driving gear (16, 21),
wherein said two driving gear (16, 21) are pinion gears positioned parallel to each other at both sides of the plane containing said first axis (a) and said second axis (b), a first pinion gear thereof having right-hand helical teeth, and a second pinion gear thereof having left-hand helical teeth, and
wherein said two driven ring gears (17, 22) are disposed coaxially with said second axis (b) and coaxially laid one upon the other.

2. A wrist driving structure for an industrial robot according to claim 1,
**characterized in that** said two driving motors (13, 14) are disposed such that output shafts of said two giving motors (13, 14) are positioned generally symmetrically with respect to the plane containing said first axis (a) and said second axis (b).

3. A wrist driving structure for an industrial robot according to claim 1,
**characterized in that** said first axis (a) and said second axis (b) and said third axis (c) intersect at one point.

## Patentansprüche

1. Gelenkantriebsstruktur für einen Industrieroboter, umfassend:
ein erstes Gelenkelement (10, 10A, 10B), das in freitragender Weise drehbar um eine erste Achse (a) gelagert ist;
ein zweites Gelenkelement (11), das in freitragender Weise mit einem proximalen Ende als Lagerpunkt an einer distalen Endstelle des ersten Gelenkelements (10, 10A, 10B) schwenkbar um eine zweite Achse (b) gelagert ist, die die erste Achse (a) schneidet;
ein drittes Gelenkelement (12), das in freitragender Weise an einer distalen Endstelle des zweiten Gelenkelements (11) drehbar um eine dritte Achse (c) gelagert ist, die die zweite Achse (b) schneidet;
zwei Antriebsmotoren (13, 14), die in dem ersten Gelenkelement (10, 10A, 10B) zum jeweiligen Antreiben des zweiten Gelenkelements (11) und des dritten Gelenkelements (12) vorgesehen sind; und
zwei Hypoidradgetriebesätze (15, 20) zum Reduzieren einer Drehzahl der beiden Antriebsmotoren (13, 14) mit vorbestimmten Reduktionsverhältnissen;
wobei jeder der beiden Getriebesätze (15, 20) ein von einem der beiden Antriebsmotoren (13, 14) angetriebenes Antriebszahnrad (16, 21) und ein angetriebenes Ringzahnrad (17, 22) aufweist, das mit dem Antriebszahnrad (16, 21) in Eingriff steht,
wobei die beiden Antriebszahnräder (16, 21) Kegelräder sind, die parallel zueinander an zwei Seiten der die erste Achse (a) und die zweite Achse (b) enthaltenden Ebene angeordnet sind, wobei ein erstes Kegelrad von diesen rechtsgängige helixförmige Zähne aufweist und wobei ein zweites Kegelrad von diesen linksgängige helixförmige Zähne aufweist, und
wobei die beiden angetriebenen Ringzahnräder (17, 22) koaxial zu der zweiten Achse (b) angeordnet sind und koaxial übereinander liegen.

2. Gelenkantriebsstruktur für einen Industrieroboter nach Anspruch 1,
**dadurch gekennzeichnet, dass** die beiden Antriebsmotoren (13, 14) derart angeordnet sind, dass Ausgangswellen der beiden Antriebsmotoren (13, 14) im Wesentlichen symmetrisch bezüglich der die erste Achse (a) und die zweite Achse (b) enthaltenden Ebene angeordnet sind.

3. Gelenkantriebsstruktur für einen Industrieroboter nach Anspruch 1, **dadurch gekennzeichnet, dass** sich die erste Achse (a) und die zweite Achse (b) und die dritte Achse (c) an einem Punkt schneiden.

## Revendications

1. Structure d'entraînement de poignet pour un robot industriel comprenant :
un premier élément de poignet (10, 10A, 10B) supporté de façon en porte-à-faux rotativement autour d'un premier axe (a) ;
un deuxième élément de poignet (11) supporté de façon en porte-à-faux avec une extrémité proximale comme un point de support sur un côté d'extrémité distale dudit premier élément de poignet (10, 10A, 10B) en pivot autour d'un deuxième axe (b) coupant le premier axe (a) ;
un troisième élément de poignet (12) supporté de façon en porte-à-faux sur un côté d'extrémité distale dudit deuxième élément de poignet (11) rotativement autour d'un troisième axe (c) coupant ledit deuxième axe (b) ;
deux moteurs d'entraînement (13, 14) prévus dans ledit premier élément de poignet (10, 10A, 10B) pour entraîner ledit deuxième élément de poignet (11) et ledit troisième élément de poignet (12), respectivement ; et
deux ensembles de roues dentées hypoïdes (15, 20) pour réduire une vitesse de rotation desdits deux moteurs d'entraînement (13, 14) selon des rapports de réduction prédéterminés ;
dans laquelle chacun desdits deux ensembles de roues dentées (15, 20) comprend une roue dentée menante (16, 21) entraînée par l'un desdits deux moteurs d'entraînement (13, 14) et une couronne dentée menée (17, 22) qui s'engrène avec ladite roue dentée menante (16, 21),
dans laquelle lesdites deux roues dentées menantes (16, 21) sont des pignons positionnés parallèlement l'un à l'autre sur les deux côtés du plan contenant ledit premier axe (a) et ledit deuxième axe (b), un premier pignon de ceux-ci ayant des dents hélicoïdales à pas à droite, et un deuxième pignon de ceux-ci ayant des dents hélicoïdales à pas à gauche, et
dans laquelle lesdites deux couronnes dentées menées (17, 22) sont disposées coaxialement avec ledit deuxième axe (b) et disposées coaxialement l'une par-dessus l'autre.

2. Structure d'entraînement de poignet pour un robot industriel selon la revendication 1,
**caractérisée en ce que** lesdits deux moteurs d'entraînement (13, 14) sont disposés de telle sorte que des arbres de sortie desdits deux moteurs d'entraînement (13, 14) sont positionnés généralement symétriquement par rapport au plan contenant ledit premier axe (a) et ledit deuxième axe (b).

3. Structure d'entraînement de poignet pour un robot industriel selon la revendication 1,
**caractérisée en ce que** ledit premier axe (a) et ledit deuxième axe (b) et ledit troisième axe (c) se coupent en un point.
